# EUROPEAN PATENT APPLICATION

(11) **EP 3 748 757 A1**
(43) Date of publication of application: **09.12.2020**
(21) Application number: 19747640.1
(22) Date of filing: 10.01.2019
(51) Int. Cl.: H01M 10/052, H01M 4/505, H01M 4/525, H01M 10/0567, H01M 10/0568, H01M 10/058

(54) **NON-AQUEOUS ELECTROLYTE SECONDARY BATTERY, ELECTROLYTE SOLUTION AND METHOD FOR PRODUCING NON-AQUEOUS ELECTROLYTE SECONDARY BATTERY**

(30) Priority: 31.01.2018 JP 2018014427
(71) Applicant: Panasonic Intellectual Property Management Co., Ltd., Osaka-shi, Osaka 540-6207 (JP)
(72) Inventor: NOZAKI Yasuko, Osaka 540-6207 (JP); NISHITANI Satoshi, Osaka 540-6207 (JP); FUJITOMO Chisaki, Osaka 540-6207 (JP); DEGUCHI Masaki, Osaka 540-6207 (JP)
(74) Representative: Vigand, Philippe
(86) International application number: PCT/JP2019/000476
(87) International publication number: WO 2019/150901

(57) **Abstract**

Disclosed is a non-aqueous electrolyte secondary battery including: a positive electrode, a negative electrode, a separator interposed between the positive electrode and the negative electrode, and an electrolyte solution, wherein the electrolyte solution includes a lithium salt and carboxylic acid, and the lithium salt includes lithium bis(fluorosulfonyl)imide: LiN(SO₂F)₂.

## Description

### [Technical Field]

The present invention mainly relates to an improvement in an electrolyte solution of a non-aqueous electrolyte secondary battery.

### [Background Art]

Non-aqueous electrolyte secondary batteries, in particular, lithium ion secondary batteries have a high voltage and a high energy density, and thus are thought to be promising as the power sources for compact consumer devices, power storage apparatuses, and electric vehicles. With an increasing need for batteries with a longer service life, it has been proposed to add lithium bis(fluorosulfonyl)imide (hereinafter also referred to as LFSI) to the electrolyte solution. The use of LFSI improves the initial cycle characteristics (PTLs 1 and 2).

### [Citation List]

### [Patent Literatures]

[PTL 1] Japanese Laid-Open Patent Publication No. 2017-84820
[PTL 2] WO 2016/204278A

### [Summary of Invention]

However, long-term repetition of charge/discharge cycles of a battery may result in a significant reduction in the capacity.

In view of the foregoing, an aspect of the present invention relates to a non-aqueous electrolyte secondary battery including: a positive electrode, a negative electrode, a separator interposed between the positive electrode and the negative electrode, and an electrolyte solution, wherein the electrolyte solution includes a lithium salt and carboxylic acid, and the lithium salt includes lithium bis(fluorosulfonyl)imide: LiN(SO₂F)₂.

Another aspect of the present invention relates to a non-aqueous electrolyte secondary battery including: a positive electrode, a negative electrode, a separator interposed between the positive electrode and the negative electrode, and an electrolyte solution, wherein the electrolyte solution includes a lithium salt, the lithium salt includes lithium bis(fluorosulfonyl)imide: LiN(SO₂F)₂, and the positive electrode includes a coating derived from LiN(SO₂F)₂ and carboxylic acid.

Yet another aspect of the present invention relates to an electrolyte solution including: a lithium salt and carboxylic acid, wherein the lithium salt includes lithium bis(fluorosulfonyl)imide: LiN(SO₂F)₂.

Still another aspect of the present invention relates to a method for producing a non-aqueous electrolyte secondary battery, including the steps of: assembling an uncharged battery including a positive electrode, a negative electrode, a separator interposed between the positive electrode and the negative electrode, and the above-described electrolyte solution; and charging the uncharged battery, thereby forming, on at least the positive electrode, a coating derived from LiN(SO₂F)₂ and the carboxylic acid.

According to the present invention, it is possible to obtain a non-aqueous electrolyte secondary battery having excellent long-term cycle characteristics.

### [Brief Description of Drawing]

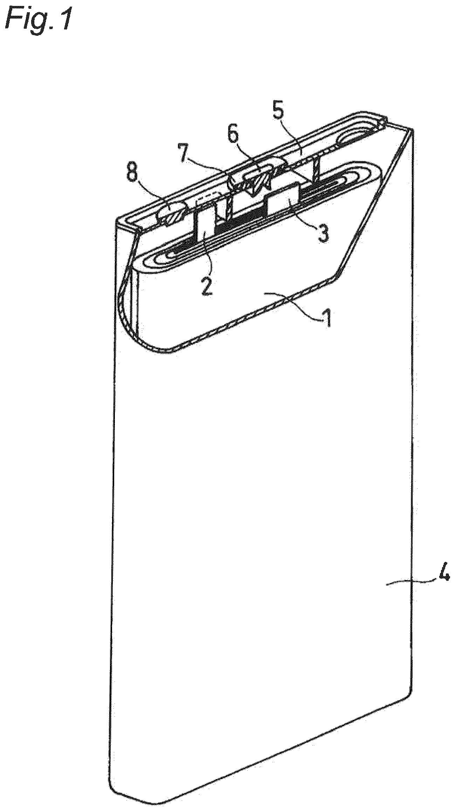

[FIG. 1] FIG. 1 is a partially cut-away schematic perspective view of a non-aqueous electrolyte secondary battery according to an embodiment of the present invention.

### [Description of Embodiment]

A non-aqueous electrolyte secondary battery according to the present invention includes: a positive electrode, a negative electrode, a separator interposed between the positive electrode and the negative electrode, and an electrolyte solution, wherein the electrolyte solution includes a lithium salt and carboxylic acid, and the lithium salt includes lithium bis(fluorosulfonyl)imide: LiN(SO₂F)₂.

Lithium bis(fluorosulfonyl)imide (hereinafter also referred to as LFSI) forms, on the positive and negative electrode surfaces, a coating (hereinafter also referred to as an LFSI coating) that has excellent lithium ion conductivity and inhibits oxidative decomposition of the electrolyte solution. The LFSI coating suppresses the reduction in the capacity retention rate at the initial stage of charge/discharge cycles.

On the other hand, long-term repetition of charge/discharge cycles of a battery may cause excessive reaction of LFSI on the positive electrode surface to inactivate the LFSI coating, resulting in an increase in the resistance and a significant reduction in the capacity.

Carboxylic acid has the effect of inhibiting the excessive reaction of LFSI on the positive electrode surface. In particular, in the case where the positive electrode may include an alkali component such as a composite oxide including lithium and nickel, the effect of inhibiting the excessive reaction ofLFSI is prominent. The reasons is presumably that the alkali component is neutralized by carboxylic acid, so that the excessive reaction between LFSI and the alkali component is inhibited.

The LFSI coating is formed on at least the positive electrode surface (normally, the positive and negative electrode surfaces) when charging an uncharged battery including an electrolyte solution including LFSI and carboxylic acid. Accordingly, the non-aqueous electrolyte secondary battery according to the present invention can be obtained by a production method including the steps of: assembling an uncharged battery including a positive electrode, a negative electrode, a separator interposed between the positive electrode and the negative electrode, and an electrolyte solution including LFSI and carboxylic acid; and charging the uncharged battery.

Alcohol may be added to the electrolyte solution. Presumably, alcohol is adsorbed onto the surface layer of the composite oxide serving as a positive electrode active material, and functions as a protective layer that inhibits the decomposition reaction of the electrolyte solution. In the case of using alcohol and carboxylic acid in combination, the excessive reaction of LFSI on the positive electrode surface and the decomposition reaction of the electrolyte solution on the surface layer of the active material particles inside the positive electrode are both inhibited. Accordingly, even in the case where charge/discharge cycles are repeated over a long period of time, the increase in the resistance and the reduction in the capacity are significantly suppressed.

In addition to neutralizing the alkali component, the carboxylic acid may be incorporated into the LFSI coating. An LFSI coating derived from LFSI and carboxylic acid has low resistance and high quality. When the carboxylic acid is added in a trace amount to the electrolyte solution, most of the carboxylic acid may be consumed for the formation of the LFSI coating, as a result of which an LFSI coating derived from LFSI and carboxylic acid is formed on at least the positive electrode surface. Even when the electrolyte solution in the battery does not include carboxylic acid, if at least the positive electrode includes a coating derived from LFSI and carboxylic acid on the surface thereof, such an embodiment is included within the present invention.

There is no particular limitation on the type of the carboxylic acid, and a carboxylic anhydride is also regarded as carboxylic acid. Although the carboxylic acid may be monocarboxylic acid, or may be dicarboxylic acid, it is preferable to use a carboxylic anhydride when dicarboxylic acid is used. Among these, it is preferable to use at least one selected from the group consisting of monocarboxylic acids having 2 to 4 carbon atoms, and it is most preferable to use acetic acid. The proportion of the acetic acid in the carboxylic acid is preferably 50 mass% or more, and more preferably 80 mass% or more, and the acetic acid may constitute 100% of the carboxylic acid.

The alcohol is preferably aliphatic alcohol, and may be monoalcohol or dialcohol, or may be a higher hydric polyol. Among these, it is preferable to use at least one monoalcohol having 1 to 4 carbon atoms, and it is most preferable to use methanol.

The content of the carboxylic acid in the electrolyte solution included in the battery is preferably 5 ppm or more and 500 ppm or less, and more preferably 5 ppm or more and 100 ppm or less, relative to the mass of the electrolyte solution. In the electrolyte solution before being injected into the battery, the content of the carboxylic acid is preferably 10 ppm or more and 500 ppm or less, and more preferably 10 ppm or more and 100 ppm or less, relative to the mass of the electrolyte solution. At least a part of the carboxylic acid in the electrolyte solution injected into the battery is oxidized or reduced when charging/discharging the battery, and is used for the formation of an LFSI coating.

The content of the alcohol in the electrolyte solution included in the battery is preferably 5 ppm or more and 500 ppm or less, and more preferably 5 ppm or more and 100 ppm or less, relative to the mass of the electrolyte solution. In the electrolyte solution before being injected into the battery, the content of the alcohol is preferably 10 ppm or more and 500 ppm or less, and more preferably 10 ppm or more and 100 ppm or less, relative to the mass of the electrolyte solution. At least a part of the alcohol in the electrolyte solution injected into the battery is adsorbed onto the surface layer of the positive electrode active material.

The contents of the carboxylic acid and the alcohol in the electrolyte solution can be measured by analyzing the electrolyte solution by gas chromatography.

In the electrolyte solution, the carboxylic acid may be present in the state of, for example, R-COOH (R is an organic functional group), and also may be present in the form of carboxylate anion (R-COO⁻), or in the form of a salt (e.g., R-COOLi). When calculating the content of the carboxylic acid, compounds that are present in the form of anion or a salt are regarded as carboxylic acid and taken into account.

The concentration of the lithium salt in the electrolyte solution is preferably 1 mol/L or more and 2 mol/L or less, and more preferably 1 mol/L or more and 1.5 mol/L or less. By controlling the lithium salt concentration within the above-described range, it is possible to obtain an electrolyte solution having excellent ion conductivity and suitable viscosity. However, the lithium salt concentration is not limited to the above examples.

In addition to LFSI, the lithium salt may further include LiPF₆. In this case, the proportion of LFSI in the lithium salt is preferably 7 mol% or more and 60 mol% or less, more preferably 30 mol% or more and 60 mol% or less, and further preferably 40 mol% or more and 60 mol% or less. By including LiPF₆ in the lithium salt, the quality of the LFSI coating is improved, so that it is possible to more significantly improve the capacity retention rate in a long-term cycle test.

Although the lithium salt may further include other salts, in addition to LFSI and LiPF₆, the proportion of the total amount of LFSI and LiPF₆ in the lithium salt is preferably 80 mol% or more, and more preferably 90 mol% or more. By controlling the proportion of LFSI and LiPF₆ within the above-described range, a battery having better long-term cycle characteristics is more likely to be obtained.

The positive electrode may include, as the positive electrode active material, a layered compound having a rocksalt-type crystal structure and including lithium and a transition metal. Among these, a composite oxide including lithium and nickel and represented by the general formula: LiₐNi_{b}M_{1-b}O₂ is preferable in that it exhibits a high capacity. However, the larger the amount of nickel in the composite oxide, the higher the alkalinity of the composite oxide becomes, resulting in an increased reactivity with LFSI. In this respect, when the electrolyte solution includes carboxylic acid, the carboxylic acid neutralizes the alkali component, so that the excessive reaction of LFSI can be inhibited.

In the general formula LiₐNi_{b}M_{1-b}O₂, M is a metal and/or a metalloid other than Li and Ni, and 0.95 ≤ a ≤ 1.2, and 0.6 ≤ b ≤ 1 are satisfied. The numerical value of "a" is a numerical value in the positive electrode active material in a fully discharged state or before being incorporated into the battery, and increases or decreases through charge/discharge. From the viewpoint of further increasing the capacity, the above-described general formula preferably satisfies 0.8 ≤ b ≤ 1, and more preferably satisfies 0.9 ≤ b ≤ 1.

M is not particularly limited, but is preferably at least one selected from the group consisting ofNa, Mg, Sc, Y, Mn, Fe, Co, Cu, Zn, Al, Cr, Pb, Sb, and B. For example, M may be at least one selected from the group consisting of Mn, Fe, Co, Cu, Zn, and Al. Among these, M preferably includes at least one selected from the group consisting of Mn, Co, and Al.

When a charge/discharge cycle test is performed in which, in a 25°C environment, constant current charge is performed with a current of 0.3 It until a battery voltage of 4.2 V is reached, then constant voltage charge is performed with a constant voltage of 4.2 V until a current of 0.015 It is reached, and then constant current discharge is performed with a current of 0.3 It until a battery voltage of 2.75 V is reached, with a rest period of 10 minutes interposed between charge and discharge, a ratio: ml/m2 between a content m1 of the carboxylic acid in the electrolyte solution in the battery before the test and a content m2 of the carboxylic acid in the electrolyte solution in the battery after 5 cycles in the test may be 1 or more. If m1 is a trace amount and is nearly consumed, and m2 becomes close to 0, the value of m1/m2 may be very large. Note that currents of 0.3 It and 0.015 It are current values 0.3 times and 0.015 times, respectively, the numerical value indicating the rated capacity of the battery, and are also represented as a current of 0.3C or a current of 0.015C, respectively.

Next, a non-aqueous electrolyte secondary battery according to an embodiment of the present invention will be described in detail. The non-aqueous electrolyte secondary battery includes, for example, a negative electrode, a positive electrode, and a non-aqueous electrolyte as described below.

### [Negative Electrode]

The negative electrode includes, for example, a negative electrode current collector, and a negative electrode material mixture layer formed on the surface of the negative electrode current collector and including a negative electrode active material. The negative electrode material mixture layer can be formed by applying, to the surface of the negative electrode current collector, a negative electrode slurry in which the negative electrode material mixture is dispersed in a dispersing medium, and drying the slurry. The coated film obtained after drying may be optionally rolled. The negative electrode material mixture layer may be formed on one surface of the negative electrode current collector, or may be formed on both surfaces thereof.

The negative electrode material mixture includes a negative electrode active material as an essential component, and may include a binder, a conductive agent, a thickener, and the like as optional components. The negative electrode active material includes a material that electrochemically absorbs and desorb lithium ion. Examples of the material that electrochemically absorbs and desorb lithium ion include a carbon material, and silicon particles dispersed in a lithium silicate phase.

Examples of the carbon material include graphite, graphitizable carbon (soft carbon), and hardly graphitizable carbon (hard carbon). Among these, graphite is preferable because of exhibiting excellent charge/discharge stability and having a small irreversible capacity. Graphite means a material having a graphite crystal structure, and includes natural graphite, artificial graphite, graphitized mesophase carbon particles, and the like. The carbon materials may be used alone or in a combination of two or more.

The silicon particles (hereinafter referred to as a "negative electrode material LSX" as needed) dispersed in the lithium silicate phase absorbs lithium ion as a result of silicon forming an alloy with lithium. The capacity can be expected to be increased by increasing the content of the silicon particles. Preferably, the lithium silicate phase has a composition formula represented by Li_{y}SiO_{z} (0<y≤8, 0.5≤z≤6). More preferably, a lithium silicate phase having a composition formula represented by Li₂ᵤSiO₂₊ᵤ (0<u<2) can be used.

A lithium silicate phase has a smaller number of sites that can react with lithium, as compared with SiOₓ, which is a composite of SiO₂ and fine silicon, and thus is less prone to cause an irreversible capacity due to charge/discharge. In the case of dispersing silicon particles in a lithium silicate phase, an excellent charging/discharging efficiency can be achieved at the initial stage of charge/discharge. In addition, the content of the silicon particles can be freely changed, and it is thus possible to design a negative electrode having a high capacity.

The crystallite size of the silicon particles dispersed in the lithium silicate phase is, for example, 5 nm or more. The silicon particles have a particulate phase of a simple substance of silicon (Si). When the crystallite size of the silicon particles is 5 nm or more, the surface area of the silicon particles can be kept small, and therefore the degradation of the silicon particles, which is accompanied by the generation of an irreversible capacity, is less likely to occur. The crystallite size of the silicon particles is calculated from the half-width of a diffraction peak attributed to the Si (111) plane in an X-ray diffraction (XRD) pattern of the silicon particles, using the Scherrer equation.

The negative electrode material LSX and the carbon material may be used in combination as the negative electrode active material. The negative electrode material LSX undergoes volume expansion and contraction due to charge/discharge, and, therefore, when the ratio thereof in the negative electrode active material increases, a contact failure between the negative electrode active material and the negative electrode current collector is likely to occur due to charge/discharge. On the other hand, by using the negative electrode material LSX and the carbon material in combination, it is possible to achieve excellent cycle characteristics, while providing the negative electrode with the high capacity of the silicon particles. The proportion of the negative electrode material LSX to the total amount of the negative electrode material LSX and the carbon material is preferably 3 to 30 mass%, for example. This makes it even easier to achieve both a high capacity and an improvement in cycle characteristics.

Anon-porous conductive substrate (a metal foil, etc.) or a porous conductive substrate (a mesh structure, a net structure, a punched sheet, etc.) is used as the negative electrode current collector. Examples of the material of the negative electrode current collector include stainless steel, nickel, a nickel alloy, copper, and a copper alloy. The thickness of the negative electrode current collector is, but is not particularly limited to, preferably 1 to 50 µm, and more preferably 5 to 20 µm, from the viewpoint of the balance between the strength and the weight reduction of the negative electrode.

Examples of the binder include resin materials, including, for example, fluorocarbon resins such as polytetrafluoroethylene and polyvinylidene fluoride (PVDF); polyolefin resins such as polyethylene and polypropylene; polyamide resins such as aramid resin; polyimide resins such as polyimide and polyamide imide; acrylic resins such as polyacrylic acid, polymethyl acrylate, and ethylene-acrylic acid copolymers; vinyl resins such as polyacrylonitrile and polyvinyl acetate; polyvinyl pyrrolidone; polyether sulfone; and rubberlike materials such as a styrene-butadiene copolymer rubber (SBR). These may be used alone or in a combination of two or more.

Examples of the conductive agent include carbon blacks such as acetylene black; conductive fibers such as carbon fiber and metal fiber; carbon fluoride; metal powders such as aluminum powder; conductive whiskers such as zinc oxide and potassium titanate; conductive metal oxides such as titanium oxide; and organic conductive materials such as phenylene derivatives. These may be used alone or in a combination of two or more.

Examples of the thickener include cellulose derivatives (cellulose ether, etc.), including, for example, carboxymethyl cellulose (CMC) and modified products thereof (also including salts such as a Na salt), and methyl cellulose; saponified products of polymers having vinyl acetate units such as polyvinyl alcohol; and polyethers (polyalkylene oxides such as polyethylene oxide, etc.). These may be used alone or in a combination of two or more.

Examples of the dispersing medium include, but are not particularly limited to, water, alcohols such as ethanol, ethers such as tetrahydrofuran, amides such as dimethylformamide, N-methyl-2-pyrrolidone (NMP), and solvent mixtures thereof.

### [Positive Electrode]

The positive electrode includes, for example, a positive electrode current collector, and a positive electrode material mixture layer formed on the surface of the positive electrode current collector. The positive electrode material mixture layer can be formed by applying, to the surface of the positive electrode current collector, a positive electrode slurry in which the positive electrode material mixture is dispersed in a dispersing medium, and drying the slurry. The coated film obtained after drying may be optionally rolled. The positive electrode material mixture layer may be formed on one surface of the positive electrode current collector, or may be formed on both surfaces thereof.

As the positive electrode active material, a layered compound having a rocksalt-type crystal structure and including lithium and a transition metal is preferable. Examples of the layered compound include LiₐCoO₂, LiₐNiO₂, LiₐMnO₂, LiₐCo_{b}Ni_{1-b}O₂, LiₐCo_{b}M_{1-b}O_{c}, and LiₐNi_{1-b}M_{b}O_{c}. A spinel compound including lithium and a transition metal is also preferably used. Examples of the spinel compound include LiₐMn₂O₄ and LiₐMn_{2-b}M_{b}O₄. A polyanion compound such as LiMPO₄ and Li₂MPO₄F is also preferably used. Here, M is at least one selected from the group consisting of Na, Mg, Sc, Y, Mn, Fe, Co, Ni, Cu, Zn, Al, Cr, Pb, Sb, and B, and a = 0 to 1.2, b = 0 to 0.9, and c = 2.0 to 2.3. Note that the numerical value of "a" is a numerical value in the positive electrode active material in a fully discharged state or before being incorporated into the battery, and increases or decreases through charge/discharge. In particular, a lithium nickel composite oxide represented by LiₐNi_{b}M_{1-b}O₂ (M is at least one selected from Co and Al) is preferable from the viewpoint of increasing the capacity, and it is more preferable that 0.8 ≤ b ≤ 1 is satisfied.

As the binder and the conductive agent, those given as the examples for the negative electrode can be used.

The shape and the thickness of the positive electrode current collector can be respectively selected from the shape and the range corresponding to the negative electrode current collector. Examples of the material of the positive electrode current collector include stainless steel, aluminum, an aluminum alloy, and titanium.

### [Electrolyte Solution]

The electrolyte solution includes a solvent, in addition to the lithium salt and the carboxylic acid. Although the electrolyte solution may include, as additives, materials different from the lithium salt, the carboxylic acid, the alcohol, and the solvent, the total amount of the lithium salt, the carboxylic acid, the alcohol, and the solvent constitute preferably 90 mass% or more, and more preferably 95 mass% or more, of the electrolyte solution.

The solvent refers to a cyclic carbonic acid ester, a cyclic carboxylic acid ester, a chain carbonic acid ester, and a chain carboxylic acid ester, as well as an electrolyte solution component that exhibits a liquid state at 25°C and whose content in the electrolyte solution is 3 mass% or more. The solute refers to an electrolyte salt that ionically dissociates in the electrolyte solution. The electrolyte solution may include various additives. Components other than the solvent and the solute are additives, and the carboxylic acid and the alcohol are classified as additives. Note that a polymer that exhibits a solid state at 25°C alone is not included in the electrolyte solution component even if its content in the electrolyte solution is 3 mass% or more. Such a polymer functions as a matrix that causes gelation of the electrolyte solution.

Specific examples of the carboxylic acid include, but are not particularly limited to, formic acid, acetic acid, propionic acid, oxalic acid, phthalic acid, phthalic anhydride, malonic acid, maleic acid, maleic anhydride, succinic acid, and succinic anhydride. Among these, acetic acid is preferable in that it is highly effective in improving the capacity retention rate in a long-term cycle test.

Examples of the alcohol include, but are not particularly limited to, methanol, ethanol, propanol, butanol, ethylene glycol, and glycerin. Among these, methanol is preferable in that it is highly effective in improving the capacity retention rate in a long-term cycle test.

As the solvent, it is possible to use a cyclic carbonic acid ester, a chain carbonic acid ester, a chain carboxylic acid ester, a cyclic carboxylic acid ester, and the like. Examples of the cyclic carbonic acid ester include propylene carbonate (PC), ethylene carbonate (EC), fluoroethylene carbonate (FEC), vinylene carbonate (VC), and vinyl ethylene carbonate (VEC). Examples of the chain carbonic acid ester include diethyl carbonate (DEC), ethyl methyl carbonate (EMC), and dimethyl carbonate (DMC). Examples of the chain carboxylic acid ester include methyl formate, ethyl formate, methyl acetate, ethyl acetate, and methyl propionate. Examples of the cyclic carboxylic acid ester include γ-butyrolactone (GBL) and γ-valerolactone (GVL). One or more of the non-aqueous solvents may be used in any combination.

Examples of the additive include 1,3-propanesultone, methylbenzenesulfonate, cyclohexylbenzene, biphenyl, diphenyl ether, and fluorobenzene.

Examples of the lithium salts different from LFSI and LiPF₆ include LiClO₄, LiAlCl₄, LiB₁₀Cl₁₀, LiBF₄, LiSbF₆, LiAsF₆, LiCF₃SO₃, LiCF₃CO₂, LiN(CF₃SO₂)₂, LiN(CF₃SO₂)(C₄F₉SO₂), LiN(C₂F₅SO₂)₂, LiCl, LiBr, and LiI. One or more of the lithium salts may be used in any combination.

### [Separator]

It is desirable that a separator is interposed between the positive electrode and the negative electrode. The separator has a high ion permeability, as well as suitable mechanical strength and insulating properties. As the separator, it is possible to use a microporous thin film, a woven fabric, a non-woven fabric, and the like. Polyolefins such as polypropylene and polyethylene are preferable as the material of the separator.

Examples of the structure of the non-aqueous electrolyte secondary battery include a structure in which an electrode group formed by winding a positive electrode and a negative electrode with a separator interposed therebetween, and a non-aqueous electrolyte are housed in an outer case. An electrode group having another configuration, such as a stacked electrode group formed by stacking a positive electrode and a negative electrode with a separator interposed therebetween, may be used in place of the wound electrode group. For example, the non-aqueous electrolyte secondary battery may have any configuration such as a cylindrical configuration, a prismatic configuration, a coin configuration, a button configuration, and a laminated configuration.

FIG. 1 is a partially cut-away schematic perspective view of a prismatic non-aqueous electrolyte secondary battery according to an embodiment of the present invention.

The battery includes a bottomed prismatic battery case 4, and an electrode group 1 and a non-aqueous electrolyte (not shown) that are housed in the battery case 4. The electrode group 1 includes a long strip-shaped negative electrode, a long strip-shaped positive electrode, and a separator interposed therebetween. The electrode group 1 is formed by winding the negative electrode, the positive electrode, and the separator around a flat plate-shaped winding core, and pulling out the winding core.

An end of a negative electrode lead 3 is attached to a negative electrode current collector of the negative electrode through welding or the like. An end of a positive electrode lead 2 is attached to a positive electrode current collector of the positive electrode through welding or the like. The other end of the negative electrode lead 3 is electrically connected to a negative electrode terminal 6 provided on a sealing plate 5 via a gasket 7. The other end of the positive electrode lead 2 is electrically connected to the battery case 4 also serving as a positive electrode terminal. A resin frame body that isolates the electrode group 1 and the sealing plate 5 from each other and also isolates the negative electrode lead 3 and the battery case 4 from each other is disposed at an upper portion of the electrode group 1. An opening of the battery case 4 is sealed by the sealing plate 5.

The non-aqueous electrolyte secondary battery may have a cylindrical structure, a coin-shaped structure, a button-shaped structure, or the like including a battery case made of metal, or may be a laminated battery including a battery case made of a laminated sheet, which is a laminate of a barrier layer and a resin sheet.

Hereinafter, the present invention will be specifically described by way of examples and comparative examples. However, the present invention is not limited to the following examples.

### <Examples 1 to 7>

### [Fabrication of Negative Electrode]

Graphite was used as the negative electrode active material. The negative electrode active material, carboxymethyl cellulose sodium salt (CMC-Na), and a styrene-butadiene rubber (SBR) were mixed at a mass ratio of 97.5:1:1.5, and water was added thereto. Thereafter, the mixture was stirred using a mixer (T.K. HTVIS MIX, manufactured by PRIMIX Corporation), to prepare a negative electrode slurry. Next, the negative electrode slurry was applied to the surface of a copper foil such that the mass of the negative electrode material mixture per m² of the copper foil was 190 g, and the coated film was dried, followed by rolling, to fabricate a negative electrode in which a negative electrode material mixture layer having a density of 1.5 g/cm³ was formed on both surfaces of the copper foil.

### [Fabrication of Positive Electrode]

A lithium nickel composite oxide (LiNi_{0.8}Co_{0.18}Al_{0.02}O₂), acetylene black, and polyvinylidene fluoride were mixed at a mass ratio of 95:2.5:2.5, and N-methyl-2-pyrrolidone (NMP) was added thereto. Thereafter, the mixture was stirred using a mixer (T.K.HIVIS MIX manufactured by PRIMIX Corporation), to prepare a positive electrode slurry. Next, the positive electrode slurry was applied to the surface of an aluminum foil, and the coated film was dried, followed by rolling, to fabricate a positive electrode in which a positive electrode material mixture layer having a density of 3.6 g/cm³ was formed on both surfaces of the aluminum foil.

### [Preparation of Non-Aqueous Electrolyte Solution]

As the solvent, a solvent mixture including ethylene carbonate (EC), dimethyl carbonate (DMC), and methyl acetate (MA) at a volume ratio of 20:70:10 was used. As the lithium salt, LFSI and LiPF₆ were used in combination in the proportions shown in Table 1. Carboxylic acid and methanol were included in the resulting electrolyte solutions in the proportions shown in Table 1. As the methyl acetate (MA), methyl acetate with a purity of 99.9999% was used.

### [Fabrication of Non-Aqueous Electrolyte Secondary Battery]

A tab was attached to each of the electrodes, and the positive electrode and the negative electrode were spirally wound with a separator interposed therebetween such that the tabs were located at the outermost peripheral portion, to fabricate an electrode group. Batteries A1 to A7 were each obtained by inserting the electrode group into an outer case made of an aluminum laminate film, vacuum drying the whole at 105°C for 2 hours, followed by injecting a non-aqueous electrolyte solution into the outer case, and sealing the opening of the outer case.

### <Example 8>

A battery A8 of Example 8 was fabricated in the same manner as in Example 1 except that a solvent mixture including ethylene carbonate (EC) and dimethyl carbonate (DMC) at a volume ratio of 20:80 was used as the solvent, and carboxylic acid and methanol were used in the proportions shown in Table 1.

### <Example 9>

A battery A9 of Example 9 was fabricated in the same manner as in Example 1 except that methanol was not used.

### <Comparative Examples 1 to 3>

As the solvent, a solvent mixture including ethylene carbonate (EC) and dimethyl carbonate (DMC) at a volume ratio of 20:80 was used. As the lithium salt, LiPF₆ was used alone in Comparative Examples 1 and 3, and LFSI and LiPF₆ were used in combination in Comparative Example 2, as shown in Table 1. In Comparative Examples 1 and 2, neither carboxylic acid nor methanol was added to the electrolyte solution. In Comparative Example 3, carboxylic acid and methanol were added to the electrolyte solution. Except for the above, batteries B1 to B3 of Comparative Examples 1 to 3 were fabricated in the same manner as in the examples.

### <Comparative Example 4>

A battery B4 of Comparative Example 4 was fabricated in the same manner as in Example 1 except that neither acetic acid nor methanol was used.

**[Table 1]**

| Battery | LFSI (mol/L) | LiPF₆ (mol/L) | LFSI in Li salt (mol%) | Solvent | Carboxylic acid | ppm | Alcohol | ppm |
|---|---|---|---|---|---|---|---|---|
| A1 | 0.6 | 0.6 | 50 | EC/DMC/MA | Acetic acid | 25 | Methanol | 24 |
| A2 | 0.8 | 0.6 | 57 | EC/DMC/MA | Acetic acid | 10 | Methanol | 10 |
| A3 | 0.1 | 1.3 | 7 | EC/DMC/MA | Acetic acid | 10 | Methanol | 10 |
| A4 | 0.8 | 0.7 | 53 | EC/DMC/MA | Propionic acid | 10 | Methanol | 10 |
| A5 | 0.8 | 0.7 | 53 | EC/DMC/MA | Acetic acid | 10 | Ethanol | 10 |
| A6 | 0.8 | 0.9 | 47 | EC/DMC/MA | Acetic acid | 500 | Methanol | 500 |
| A7 | 0.8 | 0.7 | 53 | EC/DMC/MA | Acetic acid | 1000 | - | 0 |
| A8 | 0.6 | 0.6 | 50 | EC/DMC | Acetic acid | 10 | Methanol | 10 |
| A9 | 0.6 | 0.6 | 50 | EC/DMC/MA | Acetic acid | 25 | - | 0 |
| B1 | 0 | 1.2 | 0 | EC/DMC | - | 0 | - | 0 |
| B2 | 0.8 | 0.7 | 53 | EC/DMC | - | 0 | - | 0 |
| B3 | 0 | 1.2 | 0 | EC/DMC | Acetic acid | 16 | Methanol | 15 |
| B4 | 0.6 | 0.6 | 50 | EC/DMC/MA | - | 0 | - | 0 |

### [Evaluation 1: Analysis of Electrolyte Solution in Battery]

For each of the fabricated batteries, in a 25°C environment, constant current charge was performed with a current of 0.3 It (800 mA) until a voltage of 4.2 V was reached, and then constant voltage charge was performed with a constant voltage of 4.2 V until a current of 0.015 It (40 mA) was reached. Then, constant current discharge was performed with a current of 0.3 It (800 mA) until a voltage of 2.75 V was reached.

A rest period of 10 minutes was interposed between charge and discharge, and charge/discharge was repeated for 5 cycles under the above-described charge/discharge conditions. Thereafter, each battery was taken out and disassembled, and the components of the electrolyte solution were analyzed by gas chromatography-mass spectrometry (GCMS).

The GCMS measurement conditions used for analysis of the electrolyte solution were as follows.
Apparatus: GC17A, GCMS-QP5050A, manufactured by SHIMADZU CORPORATION
Column: HP-1 (film with a thickness of 1.0 µm and a length of 60 m) manufactured by Agilent Technologies Japan, Ltd.
Column temperature: 50°C→110°C (5°C/min, 12 min hold)→250°C (5°C/min, 7 min hold)→300°C (10°C/min, 20 min hold)
Split ratio: 1/50
Linear velocity: 29.2 cm/s
Inlet temperature: 270°C
Injection amount: 0.5 µL
Interface temperature: 230°C
Mass range: m/z = 30 to 400 (SCAN mode), m/z = 29,31, 32,43, 45, 60 (SIM mode)

The content of the carboxylic acid and the content of the alcohol (the mass ratio to the entire electrolyte solution) obtained by the analysis are shown in Table 2.

**[Table 2]**

| Battery | LFSI (mol/L) | LiPF₆ (mol/L) | LFSI in Li salt (mol%) | Solvent | Carboxylic acid | GCMS analysis result ppm | Capacity retention rate 400 cycle (%) |
|---|---|---|---|---|---|---|---|
| A1 | 0.6 | 0.6 | 50 | EC/DMC/MA | Acetic acid | 14 | 81.7 |
| A2 | 0.8 | 0.6 | 57 | EC/DMC/MA | Acetic acid | 6 | 81.5 |
| A3 | 0.1 | 1.3 | 7 | EC/DMC/MA | Acetic acid | 6 | 80.8 |
| A4 | 0.8 | 0.7 | 53 | EC/DMC/MA | Propionic acid | 8 | 79.2 |
| A5 | 0.8 | 0.7 | 53 | EC/DMC/MA | Acetic acid | 9 | 78.9 |
| A6 | 0.8 | 0.9 | 47 | EC/DMC/MA | Acetic acid | 478 | 70.2 |
| A7 | 0.8 | 0.7 | 53 | EC/DMC/MA | Acetic acid | 950 | 65.8 |
| A8 | 0.6 | 0.6 | 50 | EC/DMC | Acetic acid | 6 | 70.1 |
| A9 | 0.6 | 0.6 | 50 | EC/DMC/MA | Acetic acid | 13 | 81.0 |
| B1 | 0 | 1.2 | 0 | EC/DMC | - | 0 | 59.8 |
| B2 | 0.8 | 0.7 | 53 | EC/DMC | - | 0 | 58.4 |
| B3 | 0 | 1.2 | 0 | EC/DMC | Acetic acid | 11 | 57.4 |
| B4 | 0.6 | 0.6 | 50 | EC/DMC/MA | - | 1 | 64.0 |

The batteries A1 to A9 of Examples 1 to 9 and the batteries B1 to B4 of Comparative Examples 1 to 4 were evaluated by the following method. The results of the evaluation are shown in Table 2.

### [Evaluation 2: Capacity Retention Rate in Long-Term Cycling]

Charge/discharge was repeated under the same charge/discharge conditions as those in Evaluation 1. The percentage of the discharge capacity at the 400th cycle to the discharge capacity at the 1st cycle was determined as the capacity retention rate.

From Table 2, it can be understood that the batteries A1 to A7 can achieve a high capacity retention rate. However, the capacity retention rate was slightly reduced for the battery A7, which had an acetic acid content of 1000 ppm. This is presumably because the excessive addition of acetic acid caused an excessive deposition of decomposition products of acetic acid in the electrode, so that the resistive component was increased. Note that although the batteries A1 to A7, and A9 includes methyl acetate, it is presumed, from the analysis results of GCMS and the results for the capacity retention rate, that the decomposition of methyl acetate has hardly proceeded.

### [Industrial Applicability]

According to the present invention, it is possible to provide a non-aqueous electrolyte secondary battery having excellent long-term cycle characteristics. The non-aqueous electrolyte secondary battery according to the present invention is useful as a main power source for mobile communication devices, mobile electronic devices, and the like.

### [Reference Signs List]

- 1: Electrode group
- 2: Positive electrode lead
- 3: Negative electrode lead
- 4: Battery case
- 5: Sealing plate
- 6: Negative electrode terminal
- 7: Gasket

## Claims

1. A non-aqueous electrolyte secondary battery comprising:
a positive electrode, a negative electrode, a separator interposed between the positive electrode and the negative electrode, and an electrolyte solution,
wherein the electrolyte solution includes a lithium salt and carboxylic acid, and
the lithium salt includes lithium bis(fluorosulfonyl)imide: LiN(SO₂F)₂.

2. The non-aqueous electrolyte secondary battery according to claim 1,
wherein a content of the carboxylic acid in the electrolyte solution is 5 ppm or more and 500 ppm or less, relative to a mass of the electrolyte solution.

3. The non-aqueous electrolyte secondary battery according to claim 1 or 2,
wherein a concentration of the lithium salt in the electrolyte solution is 1 mol/L or more and 2 mol/L or less.

4. The non-aqueous electrolyte secondary battery according to any one of claims 1 to 3,
wherein the lithium salt further includes LiPF₆, and
a proportion of LiN(SO₂F)₂ in the lithium salt is 7 mol% or more and 60 mol% or less.

5. The non-aqueous electrolyte secondary battery according to any one of claims 1 to 4,
wherein the positive electrode includes a composite oxide including lithium and nickel,
the composite oxide is a layered compound having a rocksalt-type crystal structure and represented by a general formula: LiₐNi_{b}M_{1-b}O₂,
M is a metal and/or a metalloid other than Li and Ni, and
0.95 ≤ a ≤ 1.2, and 0.6 ≤ b ≤ 1 are satisfied.

6. The non-aqueous electrolyte secondary battery according to claim 5,
wherein M is at least one selected from the group consisting ofNa, Mg, Sc, Y, Mn, Fe, Co, Cu, Zn, Al, Cr, Pb, Sb, and B.

7. The non-aqueous electrolyte secondary battery according to any one of claims 1 to 6,
wherein the carboxylic acid includes acetic acid.

8. The non-aqueous electrolyte secondary battery according to any one of claims 1 to 7,
wherein when a charge/discharge cycle test is performed in which, in a 25°C environment, constant current charge is performed with a current of 0.3 It until a battery voltage of 4.2 V is reached, then constant voltage charge is performed with a constant voltage of 4.2 V until a current of 0.015 It is reached, and then constant current discharge is performed with a current of 0.3 It until a battery voltage of 2.75 V is reached, with a rest period of 10 minutes interposed between charge and discharge, a ratio: ml/m2 between a content m1 of the carboxylic acid in the electrolyte solution before the test and a content m2 of the carboxylic acid in the electrolyte solution after 5 cycles in the test is 1 or more.

9. A non-aqueous electrolyte secondary battery comprising:
a positive electrode, a negative electrode, a separator interposed between the positive electrode and the negative electrode, and an electrolyte solution,
wherein the electrolyte solution includes a lithium salt,
the lithium salt includes lithium bis(fluorosulfonyl)imide: LiN(SO₂F)₂, and
the positive electrode includes a coating derived from LiN(SO₂F)₂ and carboxylic acid.

10. An electrolyte solution comprising:
a lithium salt and carboxylic acid,
wherein the lithium salt includes lithium bis(fluorosulfonyl)imide: LiN(SO₂F)₂.

11. The electrolyte solution according to claim 10,
wherein a content of the carboxylic acid is 10 ppm or more and 500 ppm or less, relative to a mass of the electrolyte solution.

12. A method for producing a non-aqueous electrolyte secondary battery, comprising the steps of:
assembling an uncharged battery including a positive electrode, a negative electrode, a separator interposed between the positive electrode and the negative electrode, and the electrolyte solution according to claim 10; and
charging the uncharged battery, thereby forming, on at least the positive electrode, a coating derived from LiN(SO₂F)₂ and the carboxylic acid.
